# EUROPEAN PATENT SPECIFICATION

(11) **EP 1 229 783 B1**
(45) Date of publication and mention of the grant of the patent: **08.12.2004**
(21) Application number: 00954397.6
(22) Date of filing: 21.08.2000
(51) Int. Cl.: A01K 31/14

(54) **THE NESTING BOX**
NISTKASTEN
NICHOIR

(30) Priority: 31.08.1999 DK 116399
(43) Date of publication of application: 14.08.2002
(73) Proprietor: Rasmussen, Soren, 2400 Kobenhavn NV (DK)
(72) Inventor: Rasmussen, Soren, 2400 Kobenhavn NV (DK)
(74) Representative: Holme, Edvard
(86) International application number: PCT/DK2000/000463
(87) International publication number: WO 2001/015519

(56) References cited:
- DE-U1- 7 132 611
- GB-A- 2 054 523
- SE-C- 128 444
- SE-C- 128 445

## Description

The present invention relates to a punched-out sheet for use in making bird nesting boxes without using tools or other aids for such bird nesting boxes.

The boxes are intended as nesting, brooding, resting and residential facilities for wild and domesticated birds.

Bird nesting boxes made of punched-out sheets are already known in prior art, see, e.g., Swedish patent No. 128445. However, a number of important details have not been taken into account in the manufacture of these boxes. The punched-out sheets do not have a carrier handle for easy handling. The size of the entrance and exit hole of the boxes cannot be adjusted, and the access to the boxes through the hole is not guarded, secured against any predators. Nor do the boxes contain any type of devices that can help the nestlings of the birds leave the boxes when they are fledged.

The object of the present invention is to remedy these disadvantages of prior-art bird nesting boxes.

This object is achieved with a punched-out sheet which is characterised in that it consists of an interconnected outer and inner sheet, the outer sheet having a carrier handle and up to several devices for adjustment and reinforcement of the entrance and exit hole of the boxes, and the inner sheet having an integral, at least bipartite suspension system and a surface device in the form of a ladder intended for arrangement on the internal back wall of the box and a transverse device in the form of a guard against predators intended for arrangement under the entrance and exit hole.

The punched-out sheet is preferably made of plastics, synthetic materials, cardboard/paper compositions, plant fibres or combinations of these materials.

The punched-out sheets are especially preferably made of hollow-structure sheet polypropylene.

In accordance with the object of the invention, the bird nesting box according to the present invention is characterised in that it is made by folding and assembling at least the inner sheet from the punched-out sheets according to the invention.

The NESTING BOX is used in all contexts where wild and domesticated birds need or use nesting boxes.

In the prior-art nesting boxes of this type, such boxes are also sometimes folded and assembled from punched-out sheets or sheets made by the use of other technology, but nesting boxes of this type have not at one and the same time addressed the following aspects: (1) that the punched-out sheet which is the basis of the nesting box is contained in an outer punched-out sheet with a carrier handle and devices for adjustment and/or retention and reinforcement of the entrance/exit hole diameter of the nesting box, combined with the aspect (2) that the diameter of the entrance/exit hole of the nesting box can be adjusted and/or retained and reinforced with devices contained in an outer punched-out sheet, combined with the aspect (3) that the nesting box has an inherent, at least bipartite suspension system contained in the punched-out sheet that is the basis of the nesting box, combined with the aspect (4) that the nesting box in its assembled state has inside surface devices ("ladder") opposite to the side of the entrance/exit hole which helps not fully fledged nestlings leave the nest box, combined with the aspect (5) that the nesting boxes in an assembled state have an internal transverse device under the entrance/exit hole ("squirrel barrier") as a guard against predators, combined with the aspect (6) that nesting boxes can withstand boiling water at cleaning, combined with the aspect (7) that the nesting boxes can withstand cleaning with all known household cleaning agents, combined with the aspect (8) that the nesting boxes can withstand strong frost, strong heat and solar influence (UV radiation) without rapidly becoming destroyed, combined with the aspect (9) that the nesting boxes can easily be opened and reclosed after, e.g., cleaning without the use of tools and aids, combined with the aspect (10) that the nesting box can be died (colour-fast) in all colours (e.g. the entire RAL scale), combined with the aspect (11) that the nesting boxes have excellent insulation properties, good ventilation and relevant draining devices at one and the same time, combined with the aspect (12) that, due to low net weight and design in general, the nesting boxes can easily/cheaply be handled at mailing/shipping in general in a non-folded/non-assembled state, combined with the aspect (13) that many (more than 50) nesting boxes can easily be manually transported over great distances in a non-folded/non-assembled state, combined with the aspect (14) that the nesting boxes are made of such materials that considerations of the environment and degradability/composting in the environment are optimised on the basis of current international environmental agreements, conventions, legislation for the use of industrially manufactured products in and around the nature.

The NESTING BOX provides a nesting box of the type mentioned in the introduction, and it is ensured that the NESTING BOX acts and appears as a nesting box in the conventional meaning in all substantial aspects.

The novelties are that the NESTING BOX can easily be shipped and transported (also manually) even over large distances, and that the NESTING BOX can easily be folded and assembled into a nesting box without the use of tools and aids on the basis of the components of an outer and an inner punched-out sheet, also at the actual place of suspension, and is easily suspended without the use of tools, and that the NESTING BOX can easily be cleaned at the place of suspension (trees, bushes, buildings, etc.) and easily be taken down and replaced, if necessary, and easily be destroyed/recycled.

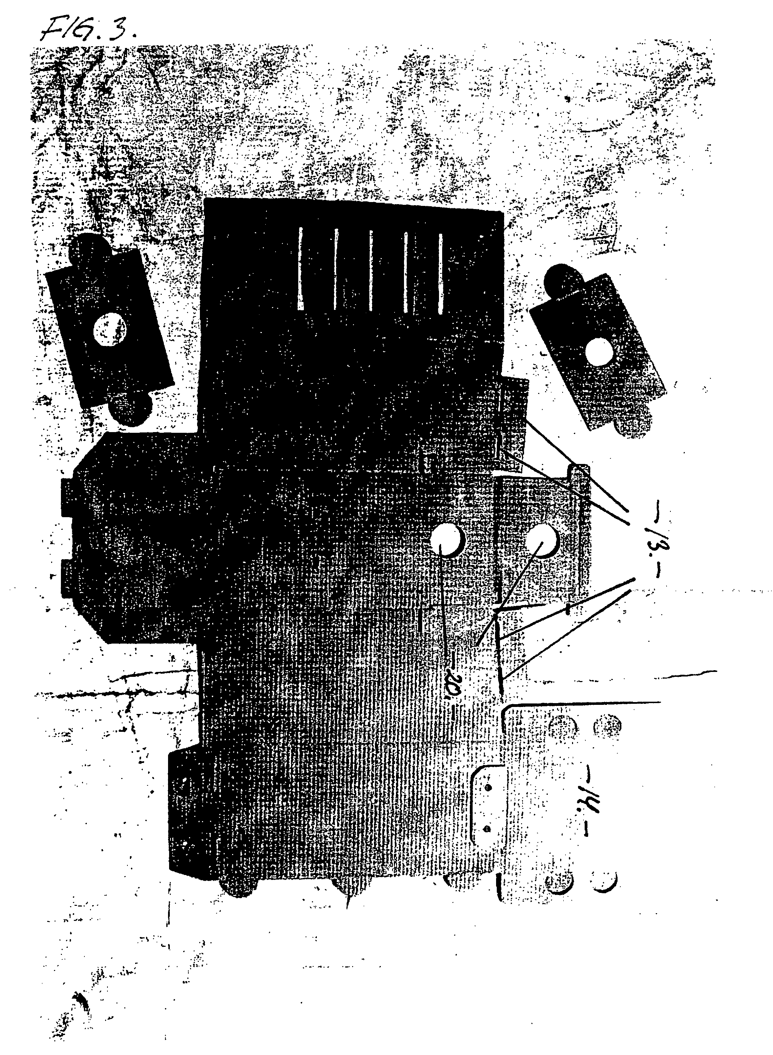

Through chosen designs and based on existing research as well as practical experience in the field, the invention has solved the problems of providing nesting boxes in which birds including any offspring obtain adequate protection/cover and shelter from predators, weather and wind, in combination with the fact that the invention is easy to: ship/transport, assemble, suspend, clean, replace and destroy/recycle. Furthermore, through its designs the invention ensures that birds and any offspring can easily get in and out of the nesting box, in combination with the fact that the invention seeks to secure birds and their offspring against predators ("squirrel barrier").

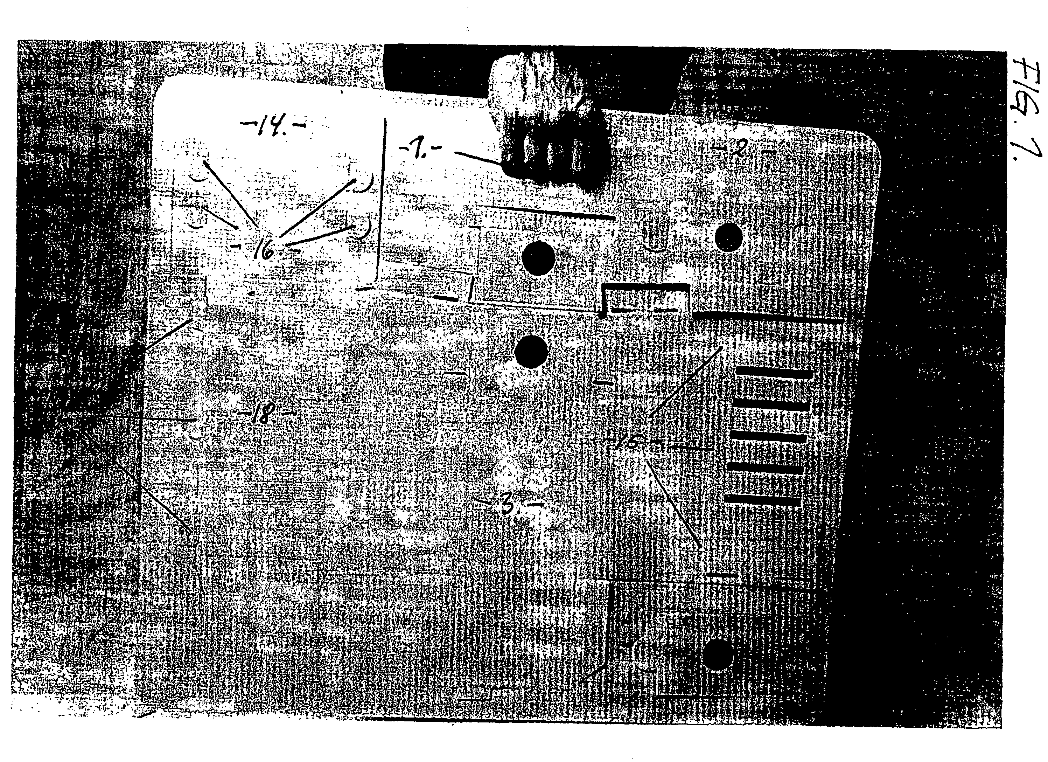

Fig. 1 shows:
   The inner and outer interconnected punched-out sheets and their components carried in the so-called carrier handle (-1-), (-2-); outer punched-out sheet (-3-); inner punched-out sheet (-15-); cut-outs, slots, for fastening and closing the outer back of the NESTING BOX (-18-) through the use of cut-outs, the flaps (-19-), (-16-); cut-outs, flaps used for closing/opening the NESTING BOX lid (-14-), which is pressed down into the cut-outs (-13-), cf. Fig. 3.

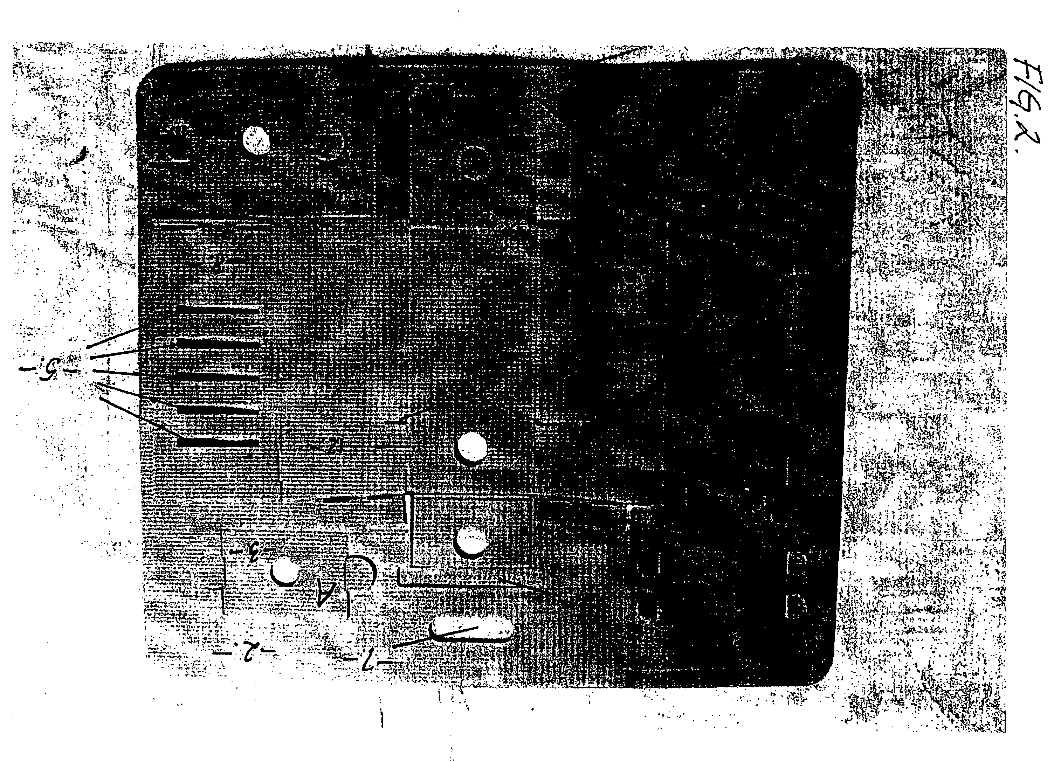

Fig. 2 shows:
   (-3-): A: where the diameter in the entrance/exit hole of this part is 28 mm, and (-3-): B: where the diameter of the entrance/exit hole of this part is 32 mm; devices for adjustment and/or retention and reinforcement of the diameter of the entrance/exit hole of the NESTING BOX and with flaps which are fastened in (-12-), and are thus mounted on the NESTING BOX. (-4-): internal transverse device under the entrance/exit hole called a "squirrel barrier" (when the NESTING BOX is folded and assembled). (-5-): internal surface devices called a "ladder", which helps not fully fledged offspring leave the NESTING BOX (when the NESTING BOX is folded and assembled). (-6-): cut-outs for fastening the "squirrel barrier" and at the same time helping to reinforce the structure. (-7-): parts of the bottom of the NESTING BOX, flaps which help close the bottom of the NESTING BOX and reinforce the structure. (-8-): cut-outs for fastening the bottom of the NESTING BOX. (-9-): parts of the bottom of the NESTING BOX, flaps which fasten and close the bottom of the NESTING BOX. (-10-): perforated cut-out which forms a circle containing an -R- which is also perforated. (-11-): parts of the suspension system of the NESTING BOX with cut-out suspension holes, flaps. (-12-): cut-outs, slots, for fastening (-3-.A.) or (-3-.B.).
Fig. 3 shows:
   The inner punched-out sheet: (-13-): cut-outs, slots, for fastening the NESTING BOX lid (-14-) by (-16-), cf. Fig. 2, being pressed down into (-13-). (-20-): cut-out entrance/exit holes with a diameter of 32 mm.
Fig. 4 shows:
   The outer punched-out sheet without the components of the inner punched-out sheet.
Figs. B:
   Figs. B1 to B16 show how the NESTING BOX is folded and assembled.
   Figs. B17 to B19 show the folded and assembled NESTING BOX suspended by means of, e.g., strips.

The NESTING BOX is made of plastics, synthetic materials, cardboard/paper compositions, plant fibres and combinations thereof in sheets or fixed shapes. The NESTING BOX is 100 to 1000 mm high, 100 to 1000 mm wide and 100 to 1000 mm deep.

A preferred embodiment of the NESTING BOX is made of hollow-structure sheet polypropylene HKP PP 2 mm, 600 g/square metre and is 260 mm high, 130 mm wide and 130 mm deep and weighs in the order of 250 g when it is folded and assembled.

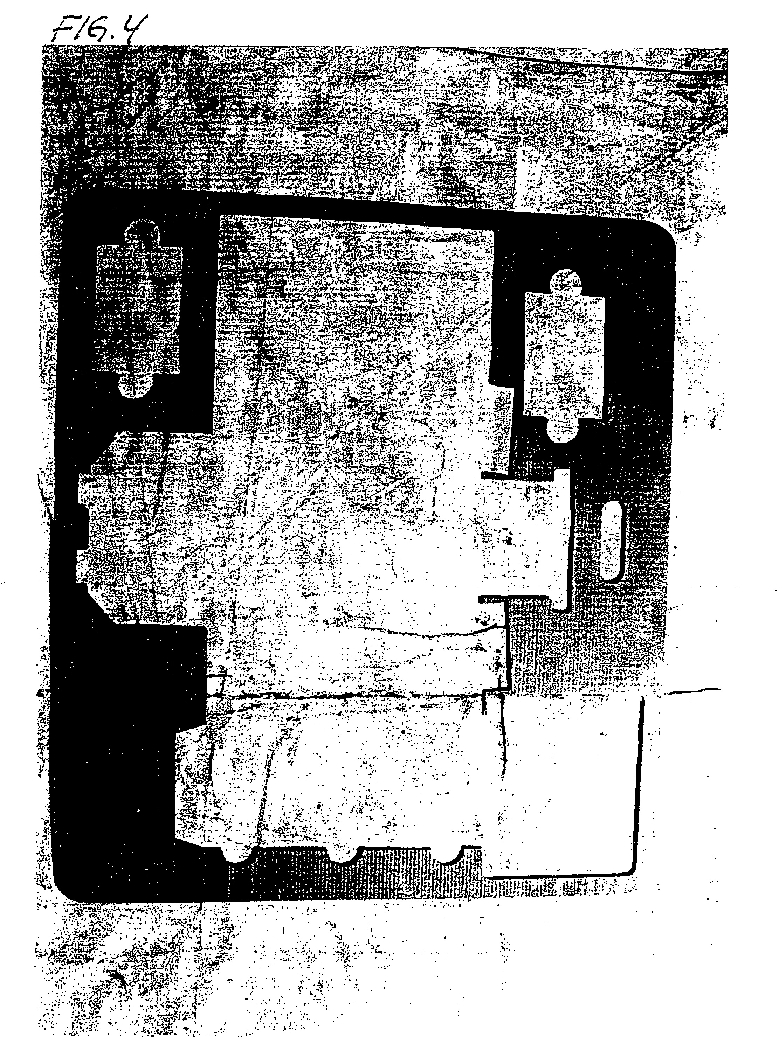

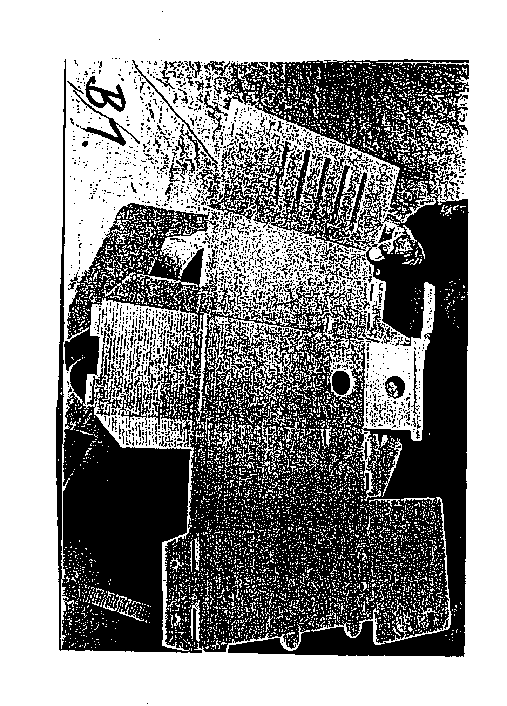

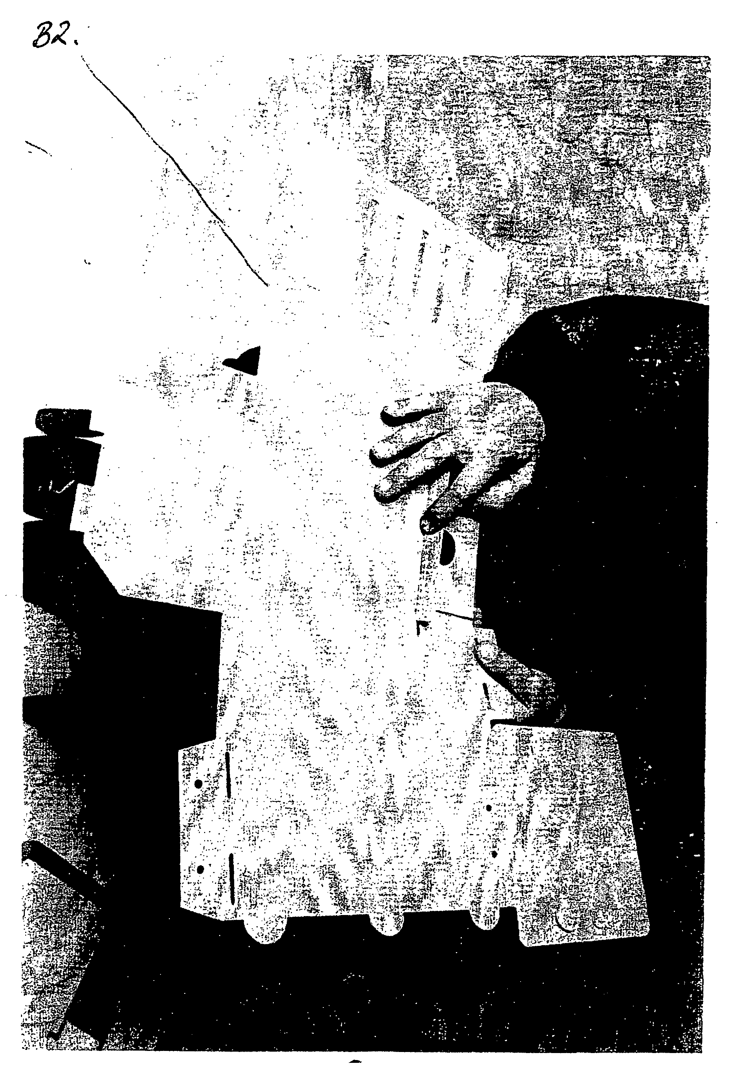

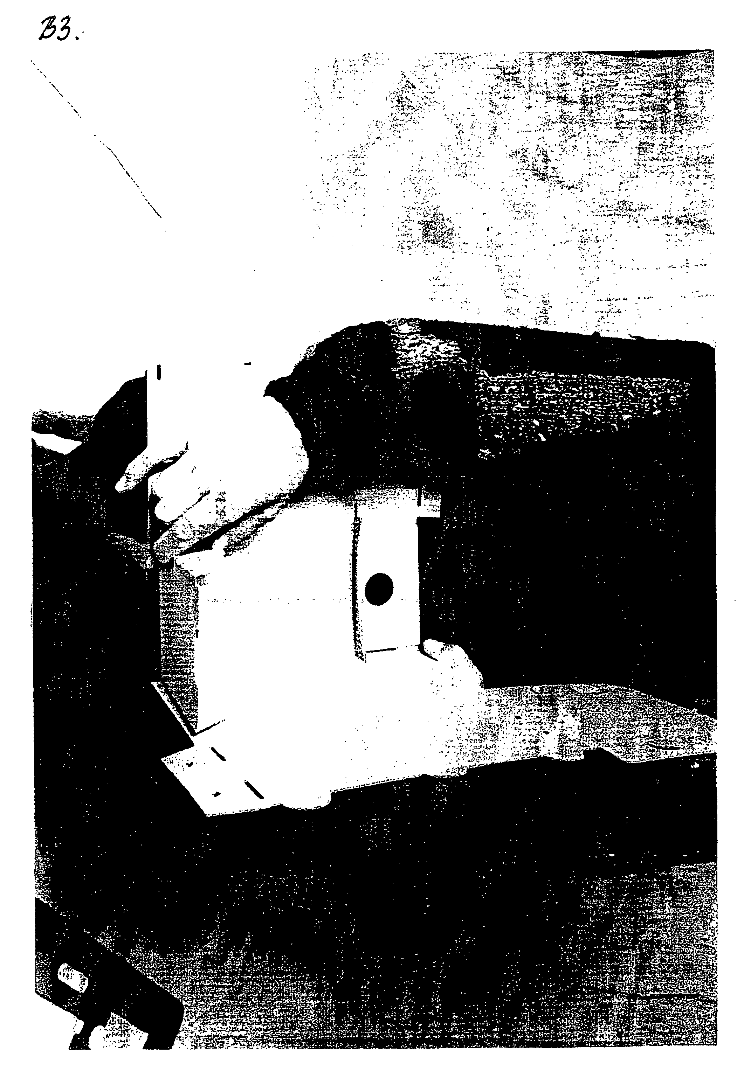

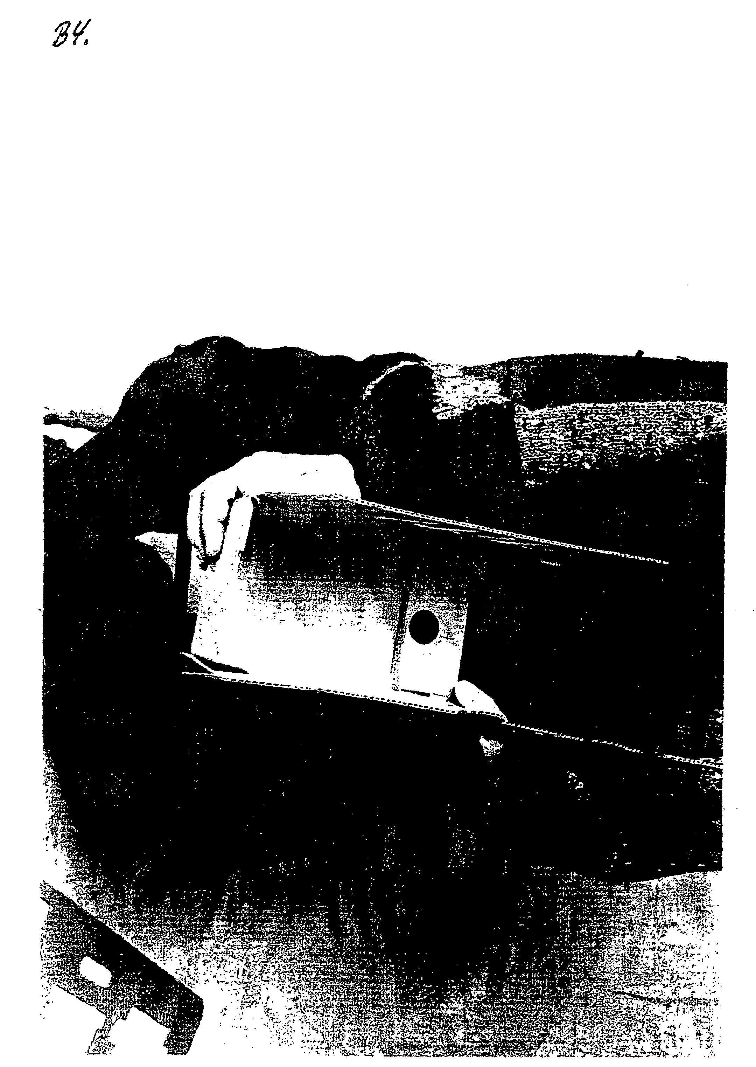

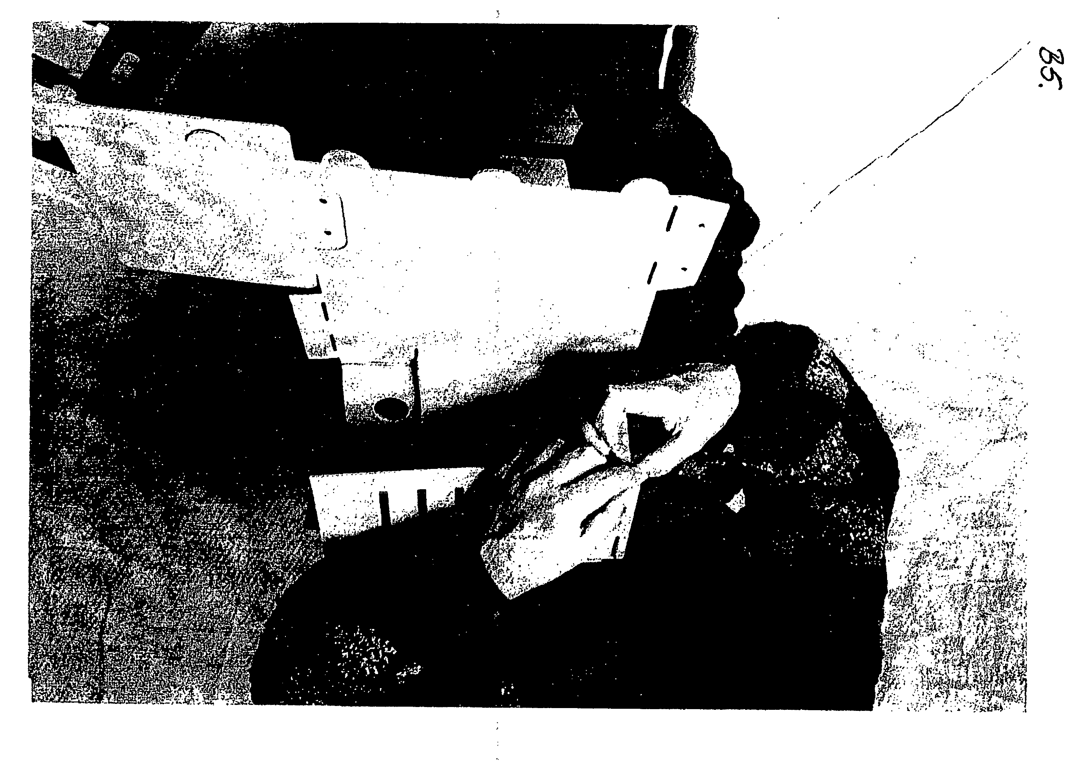

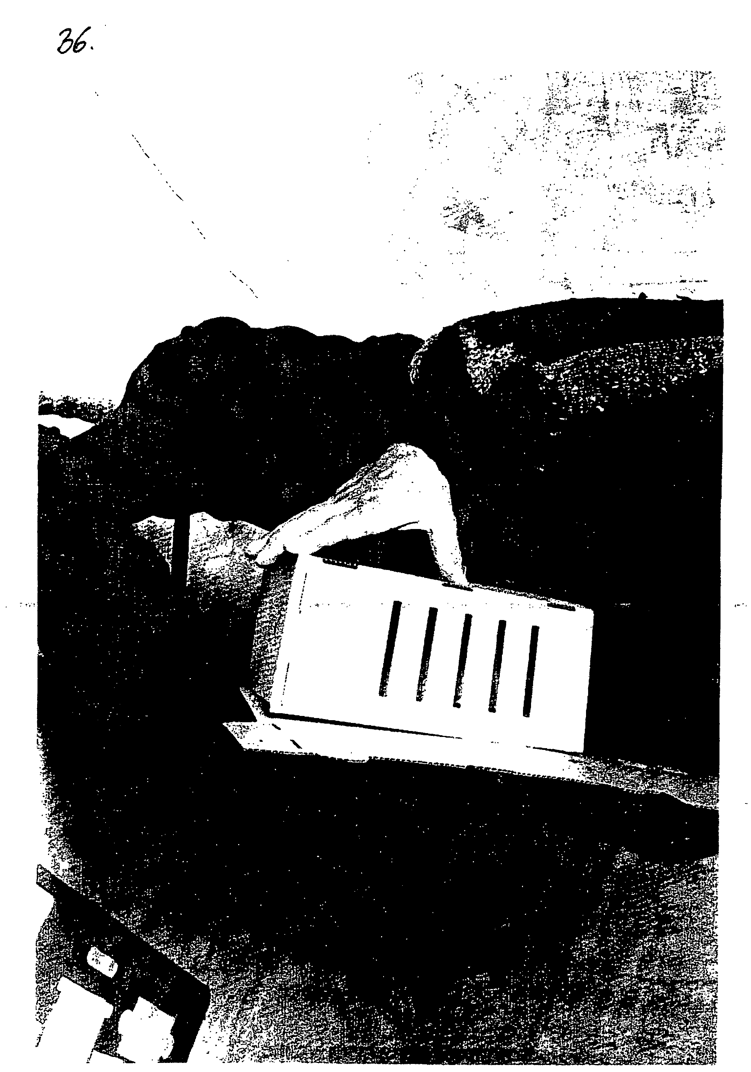

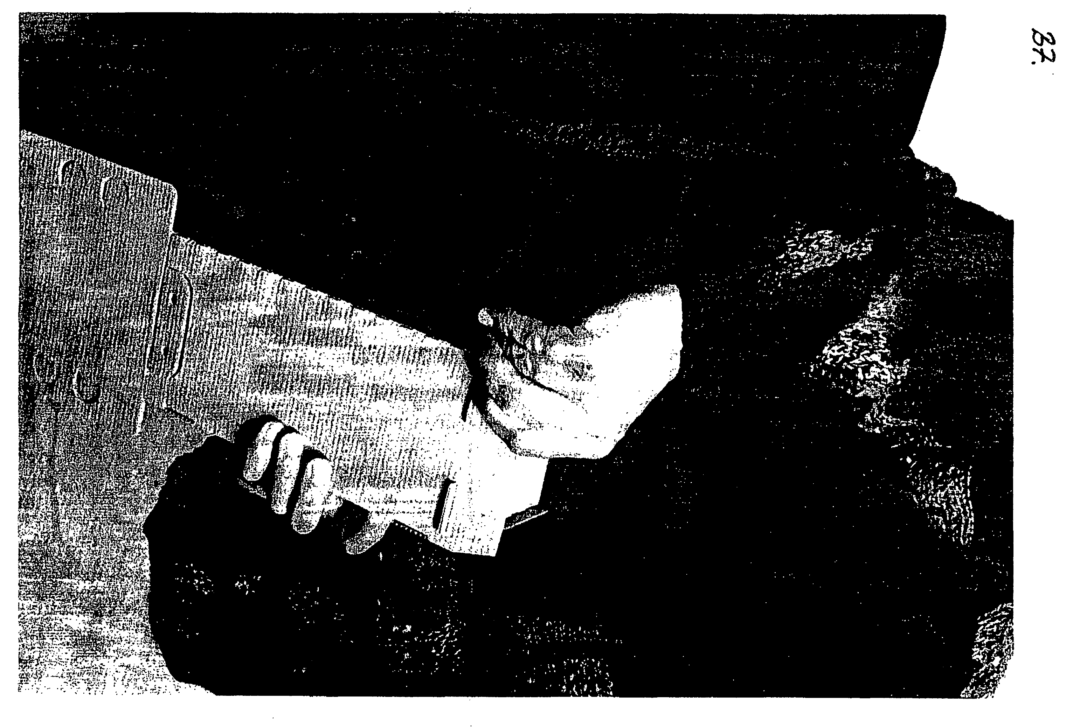

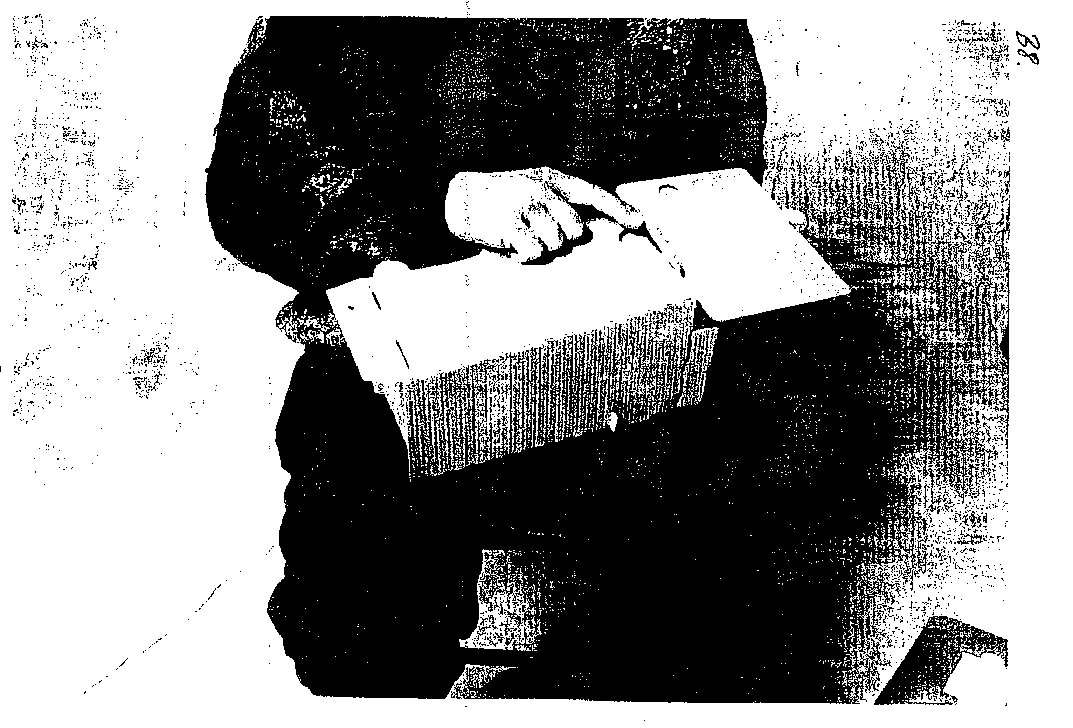

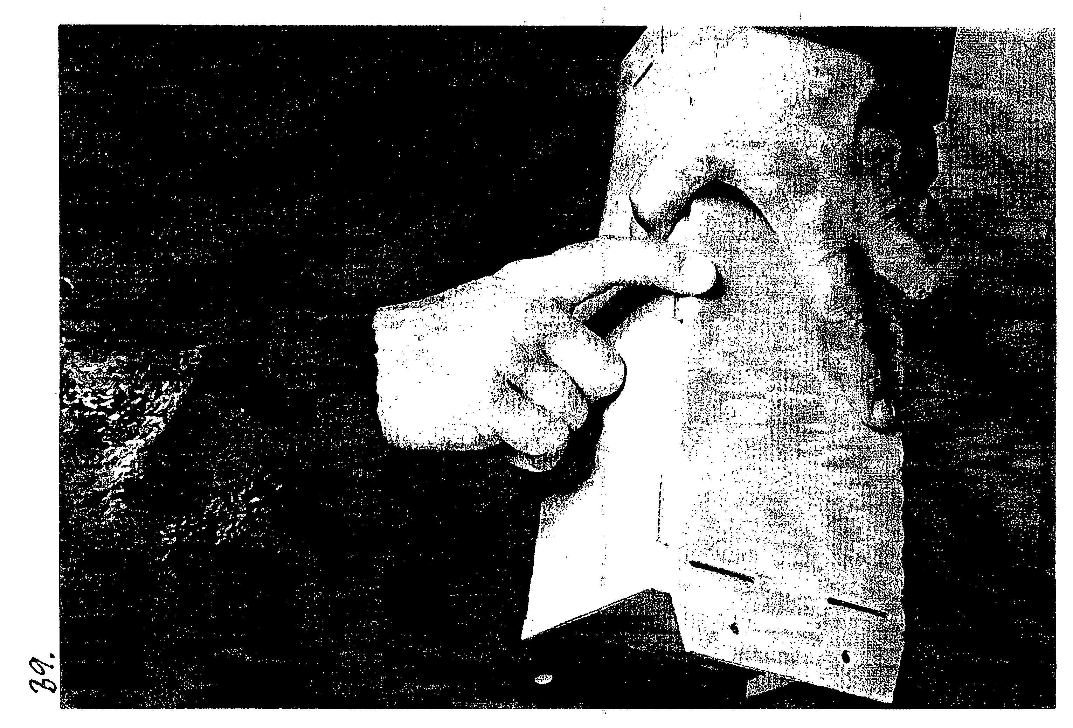

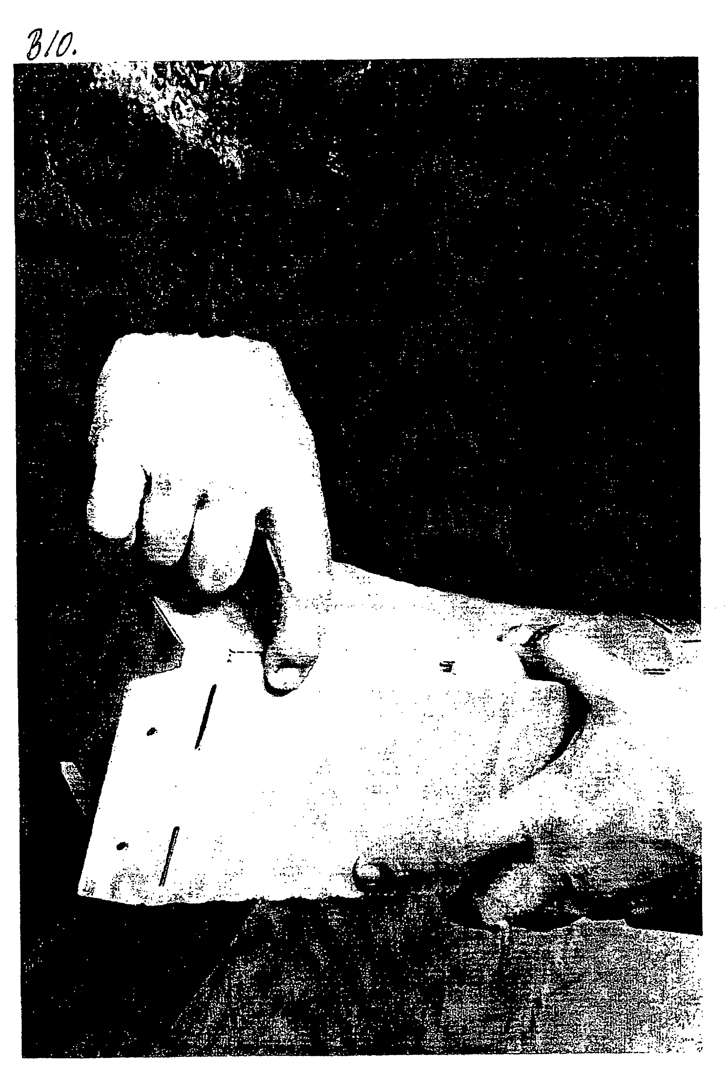

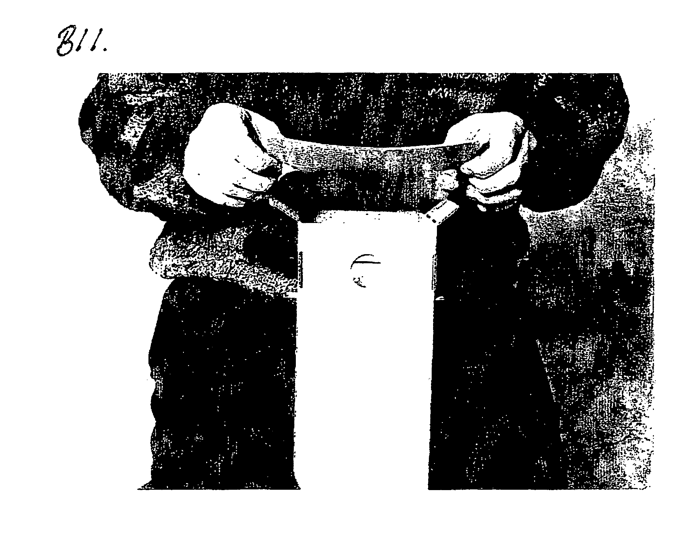

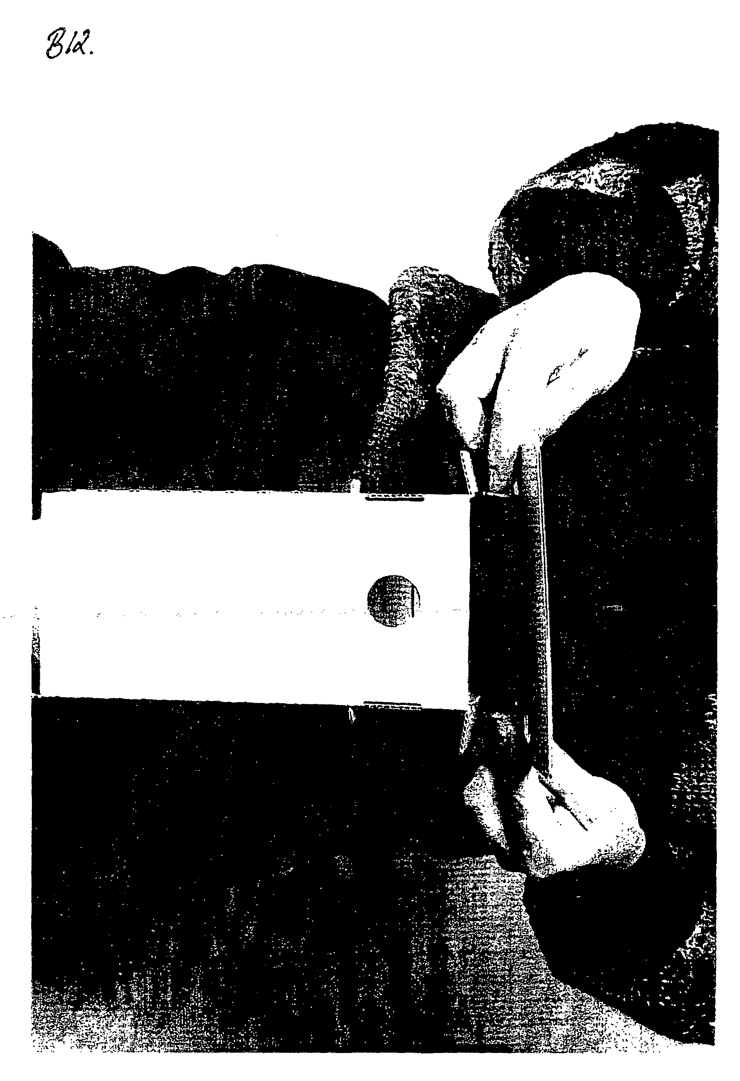

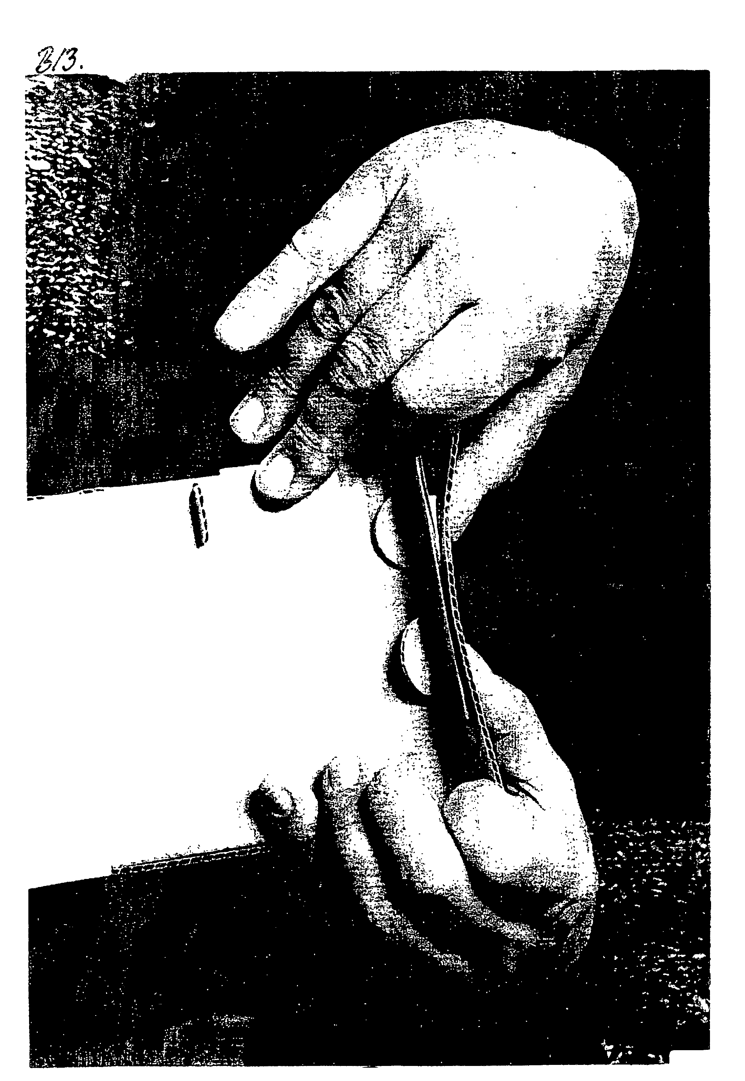

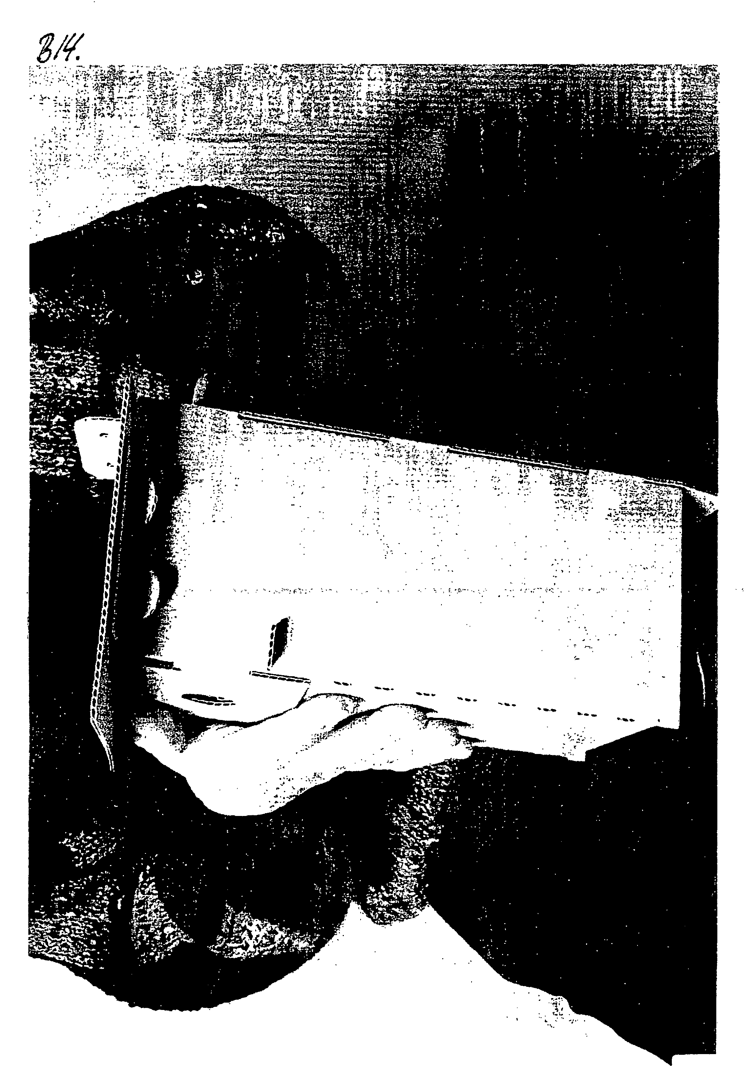

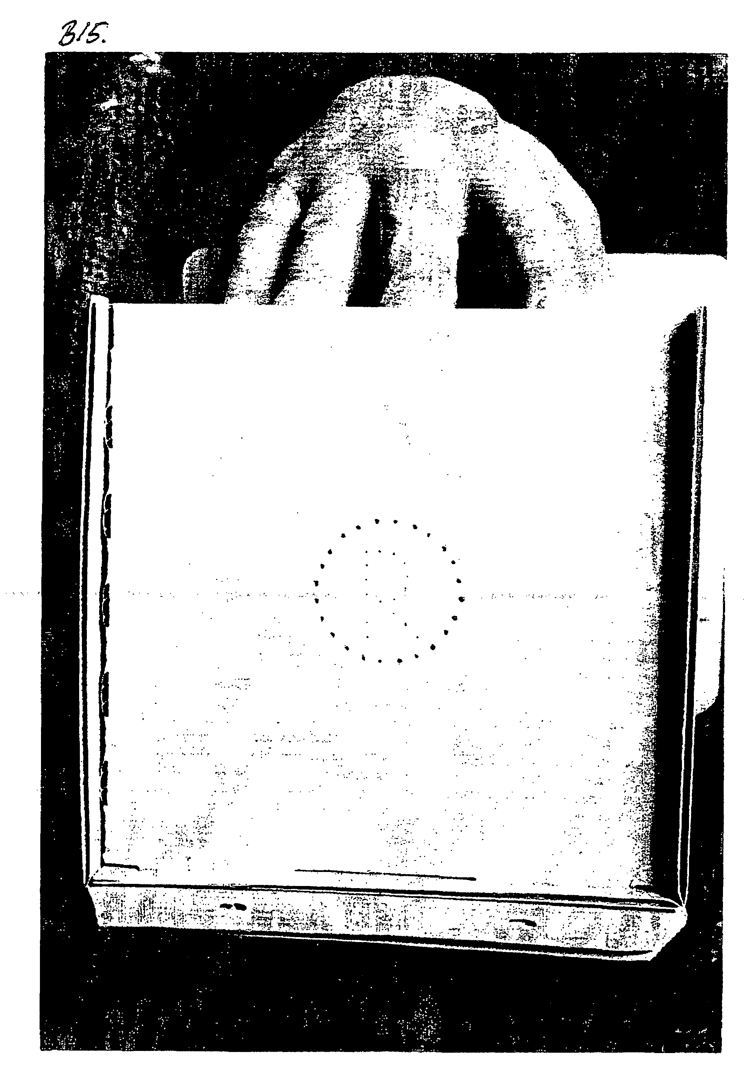

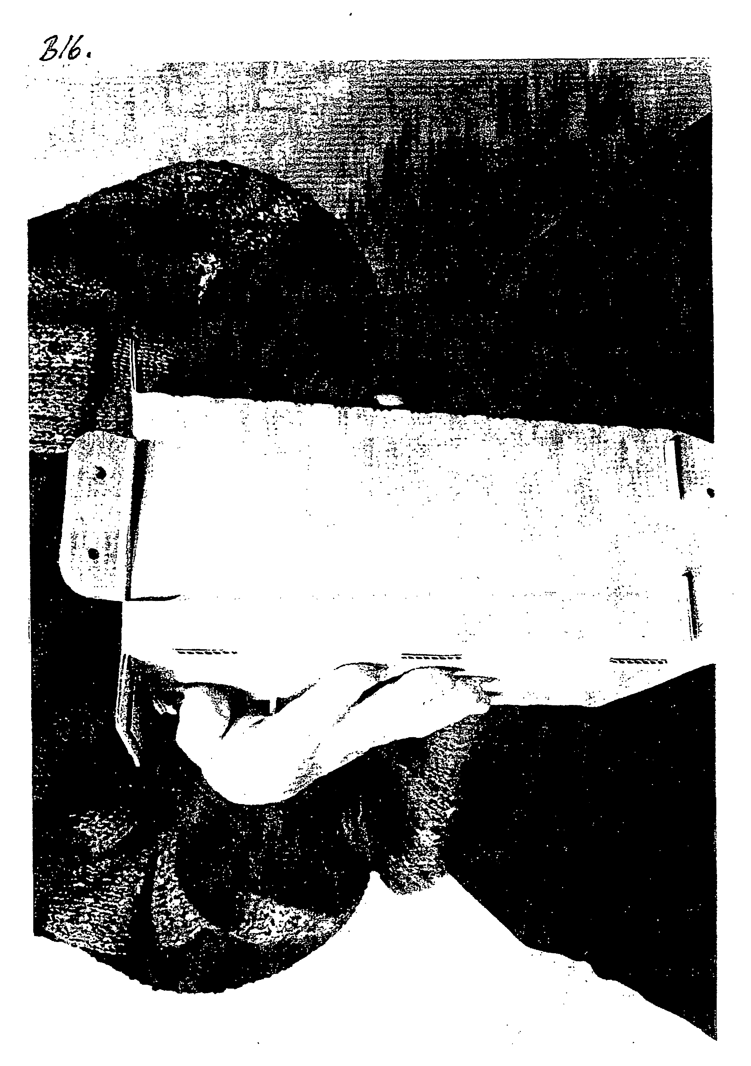

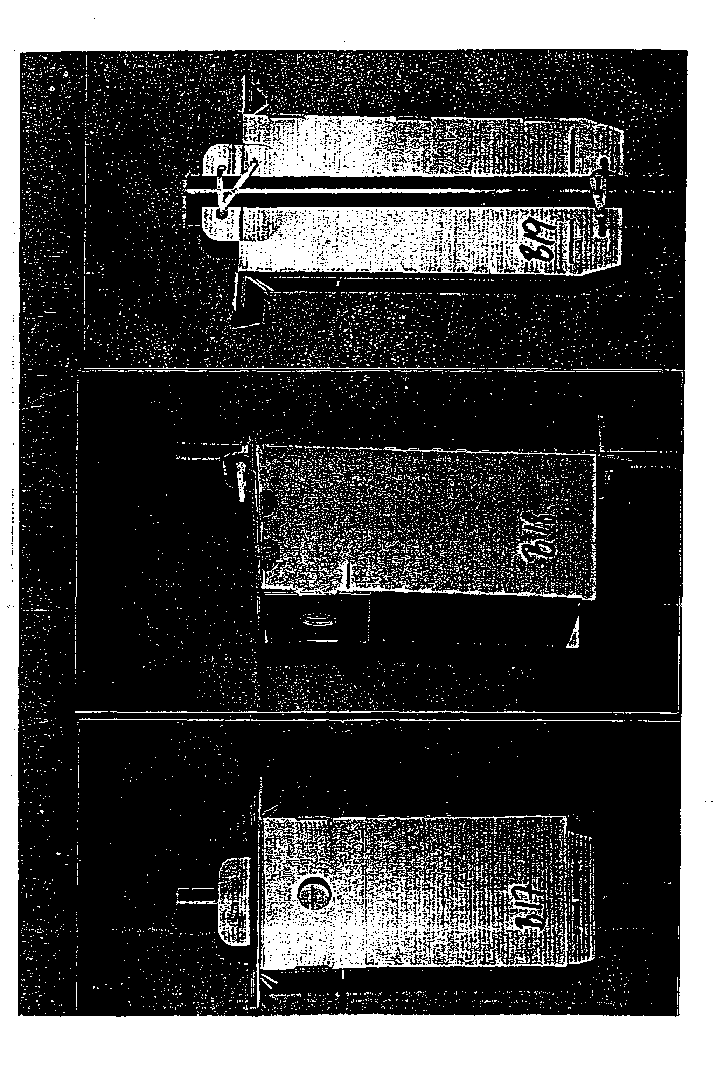

Through Figs. 1 to 4, B1 to B19, the preferred design and forming of the NESTING BOX are shown, but the NESTING BOX can be formed as all known spatial figures and all combinations thereof, and the entrance and exit hole of the NESTING BOX can also be formed as all known shapes and all combinations thereof, and the location of the entrance and exit hole is not limited to a location on the top centre part of the front of the NESTING BOX.

## Claims

1. A punched-out sheet for use in making bird nesting boxes without using tools or other aids, **characterized in that** it consists of an interconnected outer and inner sheet, the outer sheet having a carrier handle and up to several devices for adjustment and reinforcement of the entrance and exit hole of the box, the inner sheet having an integral, at least bipartite suspension system and a surface device in the form of a ladder intended for arrangement on the inner back wall of the box and a transverse device in the form of a guard against predators for arrangement under the entrance and exit hole.

2. A punched-out sheet according to claim 1, **characterized in that** it is made of plastics, synthetic materials, cardboard/paper compositions, plant fibres or combinations of these materials.

3. A punched-out sheet according to claim 2, **characterized in that** it is made of hollow-structure sheet polypropylene.

4. A bird nesting box, **characterized in that** it is made by folding and assembling at least the inner sheet of a punched-out sheet according to claims 1 to 3.

## Patentansprüche

1. Gestanzter Bogen zur Verwendung beim Herstellen von Vogelnistkästen ohne Werkzeug oder andere Hilfsmittel zu benutzen,
**dadurch gekennzeichnet, dass**
- er aus einem äußeren und einem inneren Bogen besteht, die miteinander verbunden sind,
- der äußere Bogen einen Tragegriff und bis zu mehreren Einrichtungen zur Einstellung und Verstärkung des Eingangs- und Ausgangslochs der Box hat,
- der innere Bogen ein im wesentlichen, wenigstens zweiseitiges Aufhängesystem und eine Oberflächeneinrichtung in der Form einer Leiter, die zur Anordnung an der rückseitigen Innenwand der Box vorgesehen ist, und eine transversale Einrichtung in der Form eines Schutzes gegen Fraßfeinde zur Anordnung unterhalb des Eingangs- und Ausgangslochs hat.

2. Gestanzter Bogen nach Anspruch 1, **dadurch gekennzeichnet, dass** er aus Kunststoff, synthetischem Material, Karton/Papier Zusammensetzungen, Pflanzenfasern oder Kombinationen von diesen Materialien gemacht ist.

3. Gestanzter Bogen nach Anspruch 2, **dadurch gekennzeichnet, dass** er aus einem Hohlstrukturbogen aus Polypropylen gemacht ist.

4. Vogelnistkasten, **dadurch gekennzeichnet, dass** er durch Falten und Zusammensetzen wenigstens des inneren Bogens eines gestanzten Bogens nach den Ansprüchen 1 bis 3 gemacht ist.

## Revendications

1. Feuille poinçonnée destinée à être utilisée à la fabrication de boîtes prévues pour que des oiseaux y nichent, sans l'utilisation d'outils ou d'autres aides, **caractérisée en ce qu'**elle est constituée par des feuilles extérieure et intérieure interconnectées, la feuille extérieure possédant une poignée de support et jusqu'à plusieurs dispositifs pour l'ajustement et le renforcement du trou d'entrée et de sortie de la boîte, la feuille intérieure possédant un système de suspension intégré formé au moins de deux parties, et un dispositif de surface sous la forme d'une échelle destinée à être disposée sur la paroi arrière intérieure de la boîte, un dispositif transversal sous la forme d'un élément de protection vis-à-vis de prédateurs et destiné à être disposé au-dessous du trou d'entrée et de sortie.

2. Feuille poinçonnée selon la revendication 1, **caractérisée en ce qu'**elle est formée de matières plastiques, de matières synthétiques, de compositions carton/papier, de fibres végétales ou des combinaisons de ces matériaux.

3. Feuille poinçonnée selon la revendication 2, **caractérisée en ce qu'**elle est formée d'une feuille de polypropylène à structure creuse.

4. Boîte prévue pour qu'un oiseau y niche, **caractérisée en ce qu'**elle est formée par repliage et assemblage au moins de la feuille intérieure d'une feuille poinçonnée selon les revendications 1 à 3.
